# EUROPÄISCHE PATENTSCHRIFT

(11) **EP 3 914 633 B1**
(45) Veröffentlichungstag und Bekanntmachung des Hinweises auf die Patenterteilung: **15.11.2023**
(21) Anmeldenummer: 20700167.8
(22) Anmeldetag: 13.01.2020
(51) Int. Cl.: C08G 65/26

(54) **DISPERGIERMITTEL**
DISPERSANTS
AGENT DE DISPERSION

(30) Priorität: 23.01.2019 DE 102019200789; 02.04.2019 EP 19166815
(43) Veröffentlichungstag der Anmeldung: 01.12.2021
(73) Patentinhaber: Clariant International Ltd, 4132 Muttenz (CH)
(72) Erfinder: GABEL, Dorothee, 65207 Wiesbaden (DE); HÖVELMANN, Felix, 84453 Mühldorf (DE); KUPFER, Rainer, 65795 Hattersheim (DE); SCHEINHARDT, Benjamin, 60529 Frankfurt am Main (DE); BECK, Dietmar, 65929 Frankfurt am Main (DE)
(74) Vertreter: Mikulecky, Klaus
(86) Internationale Anmeldenummer: PCT/EP2020/050630
(87) Internationale Veröffentlichungsnummer: WO 2020/151973

(56) Entgegenhaltungen:
- DE-A1-102006 002 800
- JP-A- 2000 290 343

## Beschreibung

Gegenstand der Erfindung sind verzweigte, blockartige, polymere Dispergiermittel. Diese sind geeignet, feste und flüssige Materialien in wasserhaltigen Flüssigkeiten zu emulgieren oder zu dispergieren. Beispielsweise können durch die Verwendung der erfindungsgemäßen Dispergiermittel wässrige Pigmentpräparationen organischer und anorganischer Pigmente, oder wässrige Formulierungen von Pflanzenschutzmitteln hergestellt werden.

Im Stand der Technik sind unterschiedliche Dispergiermittel mit Blockcopolymer-Struktur bekannt.

EP 3 260 480 beschreibt den Vorteil von blockartiger Anordnung verschiedener Monomere über willkürliche Anordnung in der Verwendung derartiger Polymere als Dispergiermittel. Diese Polymere werden über radikalische Polymerisationstechniken erhalten.

EP 1 078 946 beschreibt lineare, blockartige Polyalkylenoxide der Struktur R¹O(SO)ₐ(EO)_{b}(PO)_{c}(BO)_{d}R² als schaumarme Netz- und Dispergiermittel. Sie werden durch anionische ringöffnende Polymerisation erhalten. Hierbei steht R¹ für einen geradkettigen oder verzweigten oder cycloaliphatischen Rest mit 8 bis 13 Kohlenstoffatomen. R² ist Wasserstoff, ein Acylrest, Alkylrest, oder Carbonsäurerest mit jeweils 1 bis 8 C-Atomen, SO Styroloxid, EO Ethylenoxid, PO Propylenoxid, BO Butylenoxid und a 0 bis 1,9, b 3 bis 50, c 0 bis 3 und d 0 bis 3.

EP 0 940 406 legt insbesondere die Verwendung von Phosphorsäureestern offen, welche durch Umsetzung eines ω-hydroxyfunktionellen Oligo- oder Poly(alkyl)styrols zu einem Poly(alkyl)styrol-block(b)-Polyalkylenoxid-Copolymeren und anschließender Überführung in die entsprechenden Phosphorsäureester erhältlich sind. Auch hier werden wieder lineare Polymere offenbart.

DE 10 2006 002 800 offenbart Dispergiermittel auf Basis von Copolymeren aus Styroloxid, Alkylenoxiden und zwei oder mehrwertigen Aminen sowie Alkoholen. Dadurch entstehen verzweigte, blockartige Strukturen, welche die Präparation flüssiger, niedrigviskoser und schaumfreier Pigmentdispersionen ermöglichen. Es werden insbesondere niedermolekulare Startermoleküle mit einem Molekulargewicht kleiner 65 g/mol als besonders geeignet beschrieben (Muster 1 bis 4 der Beispiele). Solche können zum Beispiel Ethylenglykol (zweiwertiger Alkohol) oder Ethylendiamin sein. Dadurch ergibt sich jedoch die Notwendigkeit eines Lösemittels bei der Produktion, um einen gewissen Kesselfüllstand vor der Zugabe des Styroloxids zu erreichen.

Styroloxid muss langsam zugegeben werden, da die ringöffnende anionische Polymerisation sehr exotherm verläuft und viel Wärme freisetzt. Somit ist in diesen Fällen ein Lösemittel vonnöten, um den Kesselfüllstand, bei welchem der Rührer greifen und effizient mischen kann, zu gewährleisten. Ein Beispiel ist das Lösemittel Bis(2-methoxyethyl)ether (Diglyme). Dieses Lösemittel wiederum verursacht flüchtige organische Bestandteile im Dispergiermittel, es sei denn, es würde aufwändig entfernt werden. Im Hinblick auf zunehmend striktere behördliche Regularien und steigendes Verbraucher-Bewusstsein in der Farben- und Lackindustrie sind derartige flüchtige Bestandteile (volatile organic compounds, VOC, und semi-volatile organic compounds, SVOC) bestenfalls ganz zu vermeiden, damit die resultierenden Farben nach wie vor für Umweltsiegel qualifiziert sind. Insbesondere Dispergiermittel sollten derartige flüchtige Bestandteile nicht enthalten, da bei anderen Inhaltsstoffen (Bindemittel, Koaleszenzmittel) nicht komplett auf VOC/SVOC-Anteile verzichtet werden kann und somit ein Formulierungsspielraum für die Farbenhersteller gewährleistet bleiben muss.

Aufgabe der vorliegenden Erfindung war es daher, VOC- und SVOC-freie Dispergiermittel, beispielsweise für die Anwendung in Pigmentpräparationen oder für die Herstellung von dispersionsartigen Pflanzenschutzformulierungen, bereit zu stellen. Im Fall von Pigmentpräparationen sollen diese über eine hohe Farbstärke und niedrige Viskosität verfügen. Weitere essentielle Beschichtungseigenschaften sollen nicht negativ beeinflusst werden. Als Beispiel soll die Kompatibilität zur Basisfarbe genannt werden, die mittels des so genannten Rub-out Tests überprüft wird. Der Rub-out sollte demzufolge möglichst gering sein.

Pestizide werden üblicherweise in Form von Zubereitungen eingesetzt, um eine bessere Ausnutzung der Wirkstoffe zu erzielen. Solche Zubereitungen werden auch als Formulierungen bezeichnet und liegen in der Regel in fester oder in flüssiger Form vor. Flüssige Pestizidzubereitungen haben den Vorteil, dass sie für den Anwender leichter dosierbar und homogen in der Spritzbrühe verteilbar sind. Bei modernen Pestiziden handelt es sich meistens um komplexe organische Moleküle, die nur eine geringe Löslichkeit in Wasser oder anderen Lösemitteln aufweisen. Daher werden diese Pestizide zweckmäßigerweise in dispergierter Form als Suspensionskonzentrate zur Verfügung gestellt.

Im Fall dieser dispersionsartigen Pflanzenschutzformulierungen, speziell Suspensionskonzentrate, sollen die festen Wirkstoffe effizient und kleinteilig dispergiert werden und eine Sedimentation soll verhindert werden. Die Kleinteiligkeit der Wirkstoffe gewährleistet, dass der Wirkstoff entsprechend von der Pflanze oder dem Zielorganismus aufgenommen werden kann. Im Fall von emulgierbaren Konzentraten, werden hydrophobe Lösemittel und darin gelöste pestizide Wirkstoffe und Netz- und emulgierende Dispergiermittel als Konzentrate formuliert und zur Applikation durch Verdünnen mit wasserhaltigen Flüssigkeiten zu einer wässrigen Spritzbrühe formuliert, in der die hydrophoben Lösemittel und Wirkstoffe emulgiert vorliegen.

Zur Stabilisierung von Pestiziden in Suspensionskonzentraten sind Dispergiermittel notwendig. Diese Dispergiermittel, gegebenenfalls unterstützt durch geeignete oberflächenaktive Substanzen (Netzmittel), ermöglichen die Herstellung des Suspensionskonzentrates, welches in der Regel mit Hilfe einer Mahlung bewerkstelligt wird, um hohe mechanische Kräfte in das System einzutragen. Nach dem Mahlvorgang wirken die Dispergiermittel durch sterische oder elektrostatische Wechselwirkungen stabilisierend auf das System. Dispergiermittel können anionischer, kationischer, amphoterer oder nichtionischer Struktur sein. Sie können niedermolekularer Natur sein, oder höhermolekulare Polymere darstellen, die eine statistische, alternierende, blockartige, kammartige oder sternförmig angeordnete Struktur der polymerisierten Monomere ausbilden.

Beispiele für kommerziell bedeutende Dispergiermittel, die in großen Mengen zur Herstellung von Suspensionskonzentraten verwendet werden, sind sulfonierte Kondensationsprodukte aus Alkylnaphthalinen mit Formaldehyd (Naphthalinsulfonate) oder Ligninsulfonate. Diese Produkte genügen jedoch nicht mehr den heutigen Anforderungen hinsichtlich toxikologischer Unbedenklichkeit und Anwendersicherheit, da sie haut- und augenreizend wirken. Außerdem sind diese Dispergiermittel nicht besonders effektiv, d. h. es werden relativ große Mengen benötigt, um stabile Suspensionskonzentrate zu erhalten.

Aufgabe der vorliegenden Erfindung war es daher, Suspensionskonzentrate bereit zu stellen, die auf Dispergiermitteln basieren, die auch in geringen Mengen eine ausreichende Stabilisierung des Suspensionskonzentrates ermöglichen, einfach zu verarbeiten sind, bevorzugt in flüssiger Form vorliegen und die sich durch ein vorteilhaftes toxikologisches Profil auszeichnen.

Diese Aufgabe konnte überraschenderweise besonders gut durch verzweigte polymere Strukturen gelöst werden, welche Alkylenoxidadditionsprodukte sind, die aus drei- oder höherwertigen Polyolen gestartet werden. Es handelt sich um Blockcopolymere, die Struktureinheiten aus Polyol, Styroloxid und mindestens einem Alkylenoxid umfassen.

Durch die mindestens dreiwertigen Startermoleküle haben diese Polymere stern- oder dendrimerartige Strukturen mit einem eher hydrophoben Kern und einer eher hydrophilen Peripherie. Bei der Verwendung anderer Startermoleküle und anderer als der genannten Zusammensetzungen oder Reihenfolgen der Blöcke erhält man Dispergiermittel, die bei Verwendung in Pigment- und Pflanzenschutzformulierungen nicht das gesamte vorstehend genannte Eigenschaftsprofil aufweisen, insbesondere hinsichtlich der flüchtigen organischen Anteile und der koloristischen Eigenschaften sowie Viskosität, Stabilität und Kompatibilität.

Gegenstand der Erfindung sind Zusammensetzungen, welche Verbindungen der Formel (I), der Formel (II), oder deren Mischungen enthalten, 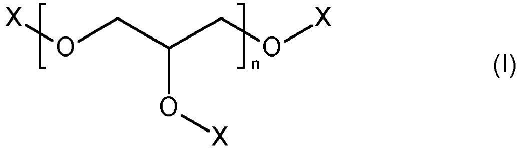 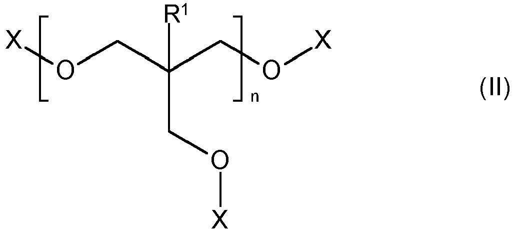 wobei
- n: eine ganze Zahl größer oder gleich 1
- R¹: ein aliphatischer, linearer oder verzweigter Kohlenwasserstoffrest mit 1 bis 10 Kohlenstoffatomen, ein Wasserstoffatom, die Struktureinheit -O-X, oder die Struktureinheit -CH₂-O-X ist,
- X: der Formel (III) entspricht 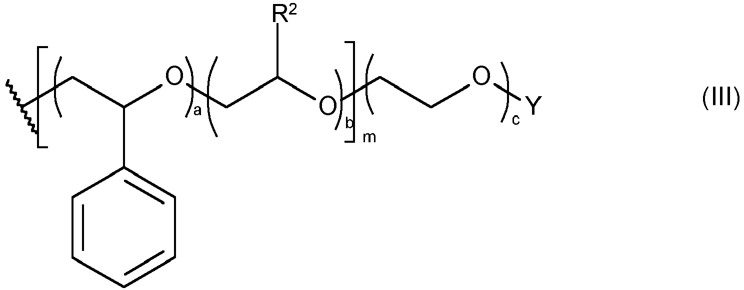
worin
- a: eine ganze Zahl von 2 bis 6
- b: eine ganze Zahl von 0 bis 3,
- c: eine ganze Zahl von 20 bis 28,
- m: 1 oder 2,
- R²: ein aliphatischer, linearer oder verzweigter Kohlenwasserstoffrest mit 1 bis 10 Kohlenstoffatomen,
- Y: Wasserstoff, -SO₃M, -SO₂M, -PO₃M₂, oder -CH₂COOM, und
- M: ein Kation ist.

Die Verbindungen der Formel (I), der Formel (II), oder deren Mischungen sind vorzugsweise geeignet, als Emulgator oder Dispergator zu wirken. Sie werden im Folgenden als erfindungsgemäße Dispergatoren oder erfindungsgemäße Dispergiermittel bezeichnet. Die Emulgier- oder Dispergierwirkung besteht vorzugsweise für hydrophobe Lösemittel oder für Dispersionen von Pestiziden, jeweils in wasserhaltigen Flüssigkeiten, sowie für anorganische oder organische Pigmente in wasserhaltigen Flüssigkeiten.

Weiterer Gegenstand der Erfindung ist die Verwendung von Verbindungen der Formel (I), der Formel (II), oder deren Mischungen als Emulgator oder Dispergator, für hydrophobe Lösemittel oder für Dispersionen von Pestiziden, in wasserhaltigen Flüssigkeiten.

Ein weiterer Gegenstand der Erfindung ist ein Verfahren zur Emulgierung oder Dispergierung mindestens eines hydrophoben Lösemittels oder Pestizids in wasserhaltigen Flüssigkeiten, indem man der Mischung aus hydrophobem Lösemittel oder Pestizid und wasserhaltiger Flüssigkeit mindestens ein Dispergiermittel der Formel (I) oder (II) zusetzt.

Ein weiterer Gegenstand der Erfindung ist ein Verfahren zur Herstellung von Verbindungen der Formel (I), der Formel (II), oder deren Mischungen, indem man
1. einen Alkohol vorlegt, der sich aus Formel I oder Formel II durch formale Ersetzung des Restes X durch H ergibt,
2. diesen mit 2 bis 6 mol Styroloxid je aktivem Wasserstoff und gegebenenfalls mit bis zu 3, vorzugsweise 0 bis 2, speziell 0 oder 1 mol eines C₃- bis C₁₂-Alkylenoxids je aktivem Wasserstoff alkoxyliert, wobei die Alkoxylierung gleichzeitig mit Styroloxid und dem C₃- bis C₁₂-Alkylenoxid erfolgen kann, oder sequentiell,
3 Schritt 2 gegebenfalls einmal bis 2 mal wiederholt, und
4. das so erhaltene Produkt mit 20 bis 28 mol Ethylenoxid je aktivem Wasserstoff alkoxyliert.

Wird Schritt 2 einmal oder zweimal wiederholt, so ist darauf zu achten, dass die molaren Mengen a und b von Styroloxid und dem C₃- bis C₁₂-Alkylenoxid am Ende der Alkoxylierung im oben angegebenen Bereich liegen.

Die Alkoxylierung wird mit Alkali-, Erdalkali-, oder Doppelmetall-Cyanid-Katalysatoren durchgeführt. Übliche Reaktionstemperaturen befinden sich im Bereich von 130-140°C. Die Reaktion wird unter inertisierten Bedingungen (mit Stickstoffüberlagerung) bei üblichen Drücken von 2 bis 9 bar durchgeführt.

In Formel (III) zeigt die Schlangenlinie die Bindungsposition dieses Restes an das restliche Molekül (Formel I oder II) an. Beginnend von dieser Bindung ist es erforderlich, dass die Struktureinheit mit dem stöchiometrischen Index m immer vor der Struktureinheit mit dem stöchiometrischen Index c steht, d.h. dass der Polyol-Starter immer zuerst mit den Styroloxid und/oder einem Alkylenoxid außer Ethylenoxid umgesetzt wird, bevor Ethylenoxid anpolymerisiert wird. Die Blöcke mit den stöchiometrischen Indices a und b innerhalb der Klammer mit dem stöchiometrischen Index m können dahingegen statistisch oder blockweise angeordnet sein.

In einer bevorzugten Ausführungsform steht a für eine Zahl von 3, 4 oder 5, speziell 3 oder 4.

In einer bevorzugten Ausführungsform steht b für eine Zahl von 0 bis 2, speziell 0 oder 1.

In einer bevorzugten Ausführungsform steht m für 1.

In einer bevorzugten Ausführungsform steht Y für H oder -PO₃M₂.

In einer bevorzugten Ausführungsform steht a für 3, 4 oder 5, speziell 3 oder 4, b für null oder 1 und das Verhältnis von (a+b):c ist 1:4 bis 1:6.

In einer bevorzugten Ausführungsform steht M für Wasserstoff, ein Kation aus der Gruppe Na⁺, K⁺, NH₄⁺, Triethanolammonium, oder eine Kombination davon.

In einer bevorzugten Ausführungsform umfasst die erfindungsgemäße Zusammensetzung eine Verbindung der Formel I und/oder II, worin
- a: für eine Zahl von 2 bis 6,
- b: für eine Zahl von 0 bis 3,
- c: für eine Zahl von 20 bis 28,
- m: für eine Zahl von 1 oder 2, insbesondere 1, und
- Y: für H oder -PO₃M₂ stehen.

In einer weiteren bevorzugten Ausführungsform entspricht das Dispergiermittel der Formel (I), worin a eine Zahl von 2 bis 6, b gleich null oder 1, m gleich eins, und c eine Zahl von 20 bis 28 ist.

In einer bevorzugten Ausführungsform steht R¹ für -CH₂-O-X.

In einer bevorzugten Ausführungsform steht n für 1.

In einer bevorzugten Ausführungsform steht R² für CH₃.

In allen vorgenannten Ausführungsformen steht a insbesondere für 3, 4 oder 5, speziell 3 oder 4.

Die erfindungsgemäßen Dispergiermittel werden durch Anlagerung und anionische Polymerisation von Styroloxid, Ethylenoxid, Propylenoxid, Butylenoxid oder längerkettiger Alkylenoxide an Polyole, hergestellt. Die Alkoxylierung erfolgt an einem oder mehreren Sauerstoffatomen dieser Polyole Die Alkoxylierung wird mit bekannten Katalysatoren, beispielsweise Alkali-, Erdalkali- oder Doppelmetall-Cyanid Katalysatoren unter inertisierter Fahrweise durchgeführt. Übliche Temperaturen befinden sich im Bereich von 130-140°C, die üblichen Drücke liegen im Bereich von 2 bis 9 bar. Die anionische Polymerisation kann statistisch (innerhalb von Block m) oder blockweise (innerhalb von Block m und in Bezug von m auf c) erfolgen.

Die Synthese kann mit Hilfslösemitteln durchgeführt werden, sofern das Verhältnis von Monomeren zum Startermolekül zu groß ist, um eine ausreichende Durchmischung von Starter und Katalysator zu Beginn der Reaktion zu gewährleisten. Solche Lösemittel können Glykole, Glykolether, Glymes oder andere organische Lösemittel sein.

Das erfindungsgemäße Dispergiermittel kann aber auch in Substanz ohne Lösemittel hergestellt werden. Zum Ende der Reaktion muss gegebenenfalls der Katalysator neutralisiert werden. Dies kann mit gängigen Säuren wie organischen Carbonsäuren (z.B.: Essigsäure, Milchsäure, Isononansäure) oder anorganischen Säuren (Mineralsäuren) erfolgen.

Die Darreichungsform der Polymere kann in Substanz (hochviskose Flüssigkeiten) oder in Lösung erfolgen. Als Lösung kann Restlösemittel aus der Synthese vorliegen. Bevorzugt ist hingegen eine wässrige Darreichungsform, aufgrund der leichteren Handhabbarkeit durch die niedrigere Viskosität bei der nachfolgenden Herstellung von Pigmentdispersionen oder Pflanzenschutzmitteln. Außerdem ist so gewährleistet, dass keine flüchtigen organischen Inhaltsstoffe (VOC/SVOC) in die bei Verwendung der erfindungsgemäßen Dispergatoren erhaltenen Endzusammensetzungen eingetragen werden.

Im Anschluss an die Copolymerisation kann das in erster Stufe entstandene nichtionische Dispergiermittel der Formel (I) oder (II) durch Anlagerung einer anionischen Gruppe modifiziert werden. Geeignete anionische Gruppen sind Schwefelsäurehalbester, die durch Umsetzung der erfindungsgemäßen nichtionischen Dispergiermittel mit Amidosulfonsäure zugänglich sind, oder Phosphorsäureester, die durch Umsetzung der erfindungsgemäßen nichtionischen Dispergiermittel mit Orthophosphorsäure, Polyphosphorsäure oder Phosphorpentoxid P₂O₅ hergestellt werden. Ethercarbonsäuren lassen sich durch Umsetzung der erfindungsgemäßen nichtionischen Dispergiermittel mit Monochloressigsäure unter alkalischen Bedingungen herstellen.

In einer besonders bevorzugten Ausführung wird das erfindungsgemäße Dispergiermittel, nach Synthese 80%ig wässrig abgemischt und mit Milchsäure neutralisiert. Milchsäure bietet den Vorteil, dass sie einen pKs-Wert von 3,90 aufweist und äußerst geruchsarm ist verglichen mit anderen organischen Säuren wie z.B. Essigsäure. Diese Vorgehensweise ist besonders für solche erfindungsgemäßen Dispergiermittel bevorzugt, worin a eine Zahl von 2 bis 6 ist, b gleich null, m gleich 1 und c eine Zahl von 20 bis 28 ist.

In einer besonders bevorzugten Ausführung wird das erfindungsgemäße Dispergiermittel, worin a eine Zahl von 2 bis 6, b gleich null und c eine Zahl von 20 bis 28 ist, am Ende der Reaktion so modifiziert, dass Y Phosphat ist.

Die erfindungsgemäßen Dispergiermittel sind zur Dispergierung mindestens eines festen Pestizids in wasserhaltigen Flüssigkeiten geeignet, indem man der Mischung aus hydrophobem Lösemittel oder Pestizid und wasserhaltiger Flüssigkeit mindestens ein Dispergiermittel der Formel (I) oder (II) zusetzt, wobei die so hergestellten Emulsionen oder Dispersionen
(A) 3 bis 80 Gew.-%, vorzugsweise 20 bis 70 Gew.-%, insbesondere 30 bis 65 Gew.-% mindestens eines hydrophoben Lösemittels oder Pestizids,
(B) 0,1 bis 30 Gew.-%, vorzugsweise 1 bis 15 Gew.-%, mindestens eines Dispergiermittels der Formel (I) und/oder (II),
(C) 5 bis 99%, vorzugsweise 5 bis 90 Gew.-%, besonders bevorzugt 10 bis 70 Gew.-% an Wasser enthalten.

Das eine oder die mehreren Pestizide der Komponente (A) der erfindungsgemäßen wässrigen Formulierungen von Pflanzenschutzmitteln werden vorzugsweise ausgewählt aus der Gruppe bestehend aus Herbiziden, Insektiziden und Fungiziden.

Bevorzugte Fungizide sind aliphatische Stickstofffungizide, Amidfungizide wie Acylaminosäurefungizide oder Anilidfungizide oder Benzamidfungizide oder Strobilurinfungizide, aromatische Fungizide, Benzimidazolfungizide, Benzothiazolfungizide, Carbamatfungizide, Conazolfungizide wie Imidazole oder Triazole, Dicarboximidfungizide, Dithiocarbamatfungizide, Imidazolfungizide, Morpholinfungizide, Oxazolfungizide, Pyrazolfungizide, Pyridinfungizide, Pyrimidinfungizide, Pyrrolfungizide, Chinonfungizide.

Bevorzugte Herbizide sind Amidherbizide, Anilidherbizide, aromatische Säureherbizide wie Benzoesäureherbizide oder Picolinsäureherbizide, Benzoylcyclohexanedionherbizide, Benzofuranylalkylsulfonatherbizide, Benzothiazolherbizide, Carbamatherbizide, Carbanilatherbizide, Cyclohexenoximherbizide, Cyclopropylisoxazolherbizide, Dicarboximidherbizide, Dinitroanilinherbizide, Dinitrophenolherbizide, Diphenyletherherbizide, Dithiocarbamatherbizide, Imidazolinonherbizide, Nitrilherbizide, Organophosphorherbizide, Oxadiazolonherbizide, Oxazolherbizide, Phenoxyherbizide wie Phenoxyessigsäureherbizide oder Phenoxybutansäureherbizide oder Phenoxypropionsäureherbizide oder Aryloxyphenoxypropiosäureherbizide, Pyrazolherbizide wie Benzoylpyrazolherbizide oder Phenylpyrazolherbizide, Pyridazinonherbizide, Pyridinherbizide, Thiocarbamatherbizide, Triazinherbizide, Triazinonherbizide, Triazolherbizide, Triazolonherbizide, Triazolopyrimidinherbizide, Uracilherbizide, Ureaherbizide wie Phenylharnstoffherbizide oder Sulfonylharnstoffherbizide.

Bevorzugte Insektizide sind Carbamatinsektizide, wie Benzofuranylmethylcarbamat- Insektizide oder Dimethylcarbamatinsektizide oder Oximcarbamatinsektizide oder Phenylmethylcarbamatinsektizide, Diamidinsektizide, Insektenwachstumsregulatoren, Macrozyklische Lactoneinsektizide wie Avermectininsektizide oder Milbemycininsektizide oder Spinosyninsektizide, Nereistoxin analoge Insektizide, Nicotinoidinsektizide wie Nitroguanidinnicotinoidinsektizide oder Pyridylmethylaminnicotinoidinsektizide, Organophosphorinsektizide wie Organophosphatinsektizide oder Organothiophosphatinsektizide oder Phosphonatinsektizide oder Phosphoramidothioatinsektizide, Oxadiazininsektizide, Pyrazolinsektizide, Pyrethroidinsektizide wie Pyrethroidesterinsektizide oder Pyrethroidetherinsektizide oder Pyrethroidoximinsektizide, Tetramsäureinsektizide, Tetrahydrofurandioninsektizide, Thiazolinsektizide.

Besonders bevorzugt wird das eine oder werden die mehreren Pestizide der Komponente a) der erfindungsgemäßen Suspensionskonzentrate ausgewählt aus der Gruppe bestehend aus Triazolfungiziden, Strobilurinfungiziden, Neonicotinoidinsektiziden, Phenylpyrazolinsektiziden, Benzoylcyclohexanedionherbiziden, Triazinherbiziden und Sulfonylharnstoffherbiziden.

Insbesondere bevorzugt wird das eine oder werden die mehreren Pestizide der Komponente a) der erfindungsgemäßen Suspensionskonzentrate ausgewählt aus der Gruppe bestehend aus Epoxiconazol, Tebuconazol, Azoxystrobin, Trifloxystrobin, Imidacloprid, Thiacloprid, Thiamethoxam, Fipronil, Ethiprol, Mesotrion, Tembotrion, Atrazin, Nicosulfuron, lodosulfuron und Mesosulfuron.

Die erfindungsgemäßen Dispergiermittel sind ferner zur Herstellung von Pigmentpräparationen mit organischen und/oder anorganischen Pigmenten besonders geeignet. In einer beispielhaften Zusammensetzung kann eine so hergestellte Pigmentpräparation die folgenden Bestandteile aufweisen:
(A) 3 bis 80 Gew.-%, vorzugsweise 20 bis 70 Gew.-%, insbesondere 30 bis 65 Gew.-% mindestens eines organischen und/oder anorganischen Pigments.
(B) 0,1 bis 30 Gew.-%, vorzugsweise 1 bis 15 Gew.-%, mindestens eines Dispergiermittels der Formel (I) und/oder (II).
(C) 0 bis 50 Gew.-%, vorzugsweise 1 bis 20 Gew.-% eines Feuchthaltemittels, üblicherweise eines Polyethylenglykolethers mit einer mittleren Molmasse zwischen 200 und 2000 g/mol.
(D) 0 bis 2 Gew.-%, vorzugsweise 0,02 bis 0,5 Gew.-% eines Entschäumers.
(E) 0 bis 2 Gew.-%, vorzugsweise 0,02 bis 0,2 Gew.-% eines Konservierungsstoffs.
(F) 5 bis 90 Gew.-%, vorzugsweise 10 bis 70 Gew.-% an Wasser.

Die Komponente (A) der Pigmentpräparation ist vorzugsweise ein feinteiliges organisches oder anorganisches Pigment oder ein Gemisch verschiedener organischer und/oder anorganischer Pigmente. Dabei können die Pigmente in Form eines trockenen Pulvers, als Granulat, oder auch als wasserfeuchter Presskuchen eingesetzt werden.

Die mit dem erfindungsgemäßen Dispergator hergestellten Pigmentpräparationen besitzen eine gute Lagerbeständigkeit und weisen eine sehr geringe Agglomerations- und Sedimentationsneigung auf. Die Pigmentpräparationen verfügen über hohe Farbstärken, definierte Farbtöne, und niedrige Viskositäten.

Die Pigmentpräparationen sind verträglich in gängigen wässrigen Anstrichsystemen, wie z.B. Dispersionsfarben hoher Pigmentvolumenkonzentrationen und Dispersionsfarben niedriger Pigmentvolumenkonzentrationen.

Pflanzenschutzformulierungen mit festen Pestiziden können wie folgt hergestellt werden:
Allgemeine Methode zur Herstellung von Suspensionskonzentraten:
Alle Komponenten, außer der zur Rheologiejustierung eingesetzten Verdicker, z.B. Kelzan^{®} S-Lösung, werden mit einem Dissolver vordispergiert. Die anschließende Feinmahlung erfolgt in einer Perlmühle, bis die gewünschte Teilchengröße erreicht ist. Im Anschluss wird die wässrige Kelzan^{®} S-Lösung zugegeben und auf die gewünschte Endviskosität eingestellt.

Im Falle der emulgierbaren Konzentrate wird das nicht mit Wasser mischbare Lösemittel zusammen mit dem einen oder den mehreren pestiziden Wirkstoffe, dem Dispergiermittel und den weiteren Komponenten zu einem Konzentrat gemischt. Das Konzentrat wird durch Verdünnen mit wasserhaltigen Flüssigkeiten zu einer Spritzbrühe emulgiert.

Pigmentpräparationen können unter Verwendung des erfindungsgemäßen Dispergators hergestellt werden, indem man die Komponente (A) in Form von Pulver, Granulat oder wässrigem Presskuchen in Gegenwart von Wasser sowie den Komponenten B, und gegebenenfalls (C), (D), (E) in an sich üblicher Weise dispergiert, anschließend gegebenenfalls Wasser zumischt und die erhaltene wässrige Pigmentdispersion mit Wasser auf die gewünschte Konzentration einstellt. Vorzugsweise werden die Komponenten (B), (C), (D), (E) und (F) vermischt und homogenisiert, dann die Komponente (A) in die vorgelegte Mischung eingerührt, wobei das Pigment angeteigt und vordispergiert wird. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100°C erfolgen, zweckmäßig bei einer Temperatur von 20 bis 60°C. Im Anschluss an die Feindispergierung kann die Pigmentpräparation mit Wasser, vorzugsweise entionisiertem oder destilliertem Wasser, weiter verdünnt werden.

Pigmentpräparationen enthaltend die erfindungsgemäßen Dispergiermittel eignen sich besonders zur Pigmentierung bzw. Herstellung von Anstrich- und Dispersionsfarben und -lacken, die für Fassadenfarben genutzt werden.

Die erfindungsgemäßen Dispergiermittel sind frei von Alkylphenol und Alkylphenolethoxylaten und damit sind Abfälle enthaltend die erfindungsgemäßen Dispergiermittel nicht schädlich für Wasserorganismen.

### Beispiele

Synthese der Muster 1 bis 3 und der Vergleichsmuster 1 bis 4

### Muster 1: Pentaerythrit + 4 mol Propylenoxid + 12 Mol Styroloxid + 80 Mol Ethylenoxid

In einem 1 L Glasautoklaven wurde das Umsetzungsprodukt von Pentaerythrit und 4 Äq. Propylenoxid (150.0 g, 0,41 mol) zusammen mit Kaliumhydroxid (40 Gew.-% in Wasser; 2,40 g) vorgelegt. Die Mischung wurde bei 125 °C unter Vakuum für eine Stunde getrocknet. Anschließend wurde bei dieser Temperatur Styroloxid (587,1 g, 4,89 mol) portionsweise zugegeben. Die Abreaktion wurde durch Titration der Epoxidzahl kontrolliert. Nachfolgend wurde das Zwischenprodukt auf 100 °C abgekühlt und isoliert. Das Zwischenprodukt (250,0 g, 0,14 mol) wurde erneut in einem 1 L Glasautoklaven vorgelegt, auf 125 °C erwärmt. Bei dieser Temperatur wurden 486,7 g (11,05 mol) Ethylenoxid unter inertisierter Fahrweise bei einem Gesamtdruckdruck von 2-5 bar portionsweise zudosiert. Nach Der Abreaktion zur Druckkonstanz wurde das Produkt auf 80 °C abgekühlt, Spuren von nicht-reagiertem Ethylenoxid durch Anlegen von Vakuum für 30 min entfernt und das Produkt isoliert.

### Muster 2: Glycerin + 12 Mol Styroloxid + 75 Mol Ethylenoxid

Glycerin (200 g, 2,17 mol) und KOH (40% aq., 30,46 g) wurden in einem 1L Autoklaven vorgelegt, die Mischung wurde bei 120 °C für 2 Stunden getrocknet und anschließend auf 130 °C erwärmt. Bei dieser Temperatur wurde Styroloxid (521,9 g 4,34 mol) portionsweise zudosiert. Die Abreaktion wurde durch Titration der Epoxidzahl kontrolliert. Das Intermediat wurde isoliert und eine Teilmenge (172,0 g, 0,51 mol) in einer weiteren Reaktion vorgelegt und durch portionsweise Zugabe von Styroloxid (735,9 g, 6,12 mol) bei 130 °C umgesetzt. Die Abreaktion wurde durch Titration der Epoxidzahl kontrolliert. Das Zwischenprodukt (200,0 g, 0,13 mol) wurde in einem Autoklaven vorgelegt und mit Ethylenoxid (459,5 g, 10,4 mol) bei 135 °C unter inertisierter Fahrweise bei einem Gesamtdruckdruck von 2-6 bar umgesetzt. Nach Der Abreaktion zur Druckkonstanz wurde das Produkt auf 80 °C abgekühlt, Spuren von nicht-reagiertem Ethylenoxid durch Anlegen von Vakuum für 30 min entfernt und das Produkt isoliert.

### Muster 3: Glycerin + 12 Mol Styroloxid + 75 Mol Ethylenoxid + Phosphat Natriumsalz

Die Vorstufe wurde analog "Muster 2" hergestellt. In einer Rührapparatur wurde Muster 2 (1730,7 g) vorgelegt und auf 60 °C erwärmt bevor Polyphosphorsäure (117,1 g) über einen Zeitraum von 2,5 Stunden zudosiert wurde. Die Innentemperatur der exothermen Reaktion lag im Bereich von 60-70 °C. Nach beendeter Zugabe von Polyphosphorsäure für 1 Stunde bei 70 °C und weitere 5 Stunden bei 100 °C nachreagieren lassen. Das Produkt wurde mit Natronlauge (50 Gew.-% aq.) auf einen pH Wert von 7,7 und der Gesamtwassergehalt auf 20 Gew.-% eingestellt.

### Vergleichsmuster 1: Ethylendiamin + 16 Styroloxid + 100 Ethylenoxid

Ethylendiamin (60,1 g) wurde in Dimethyltetraglykol (294,5 g) gelöst und mit Styroloxid (480,6 g) umgesetzt. Kaliumhydroxid wurde zugegeben (40 Gew.-% aq., 15,0 g) und das enthaltene Wasser wurde bei 100 °C im Vakuum entfernt. Anschließend wurde weiteres Styroloxid (1441,8 g) zugegeben und das Intermediat nach vollständiger Abreaktion isoliert. In einer Folgereaktion wurde das Intermediat (341,6 g) mit Ethylenoxid (656,5 g) umgesetzt. Nach vollständiger Abreaktion wurde das Produkt auf einen Wassergehalt von 20% eingestellt und isoliert.

### Vergleichsmuster 2: Ethylendiamin + 4 Propylenoxid + 8 Styroloxid + 80 Ethylenoxid

Analog den zuvor beschriebenen Synthesen wurde das Umsetzungsprodukt von Ethylendiamin und 4 Äq. Propylenoxid (200,0 g, 0,68 mol) mit Kaliumhydroxid (40 Gew.-% in Wasser; 5,59 g) alkalisiert und getrocknet und bei 130 °C mit Styroloxid (587,1 g, 4,89 mol) reagiert. Das erhaltene Zwischenprodukt (220,0 g, 0,17 mol) wurde bei 135 °C mit Ethylenoxid (583,1 g, 13,24 mol umgesetzt. Nach Der Abreaktion zur Druckkonstanz wurde das Produkt auf 80 °C abgekühlt, Spuren von nicht-reagiertem Ethylenoxid durch anlegen von Vakuum für 30 min entfernt und das Produkt isoliert.

### Vergleichsmuster 3: Pentaerythrit + 4 Propylenoxid + 4 Styroloxid + 10 Ethylenoxid

Analog den zuvor beschriebenen Synthesen wurde das Umsetzungsprodukt von Pentaerythrit und 4 Äq. Propylenoxid (225,0 g, 0,61 mol) mit Kaliumhydroxid (40 Gew.-% in Wasser; 3,61 g) alkalisiert und getrocknet und bei 130 °C mit Styroloxid (293,5 g, 2,44 mol) reagiert. Das erhaltene Zwischenprodukt (180,0 g, 0,21 mol) wurde bei 135 °C mit Ethylenoxid (373 g, 8,48 mol) umgesetzt. Nach der Abreaktion zur Druckkonstanz wurde das Produkt auf 80 °C abgekühlt, Spuren von nicht-reagiertem Ethylenoxid durch anlegen von Vakuum für 30 min entfernt und das Produkt isoliert.

### Vergleichsmuster 4: Pentaerythrit + 4 Propylenoxid + 8 Styroloxid + 140 Ethylenoxid

Analog den zuvor beschriebenen Synthesen wurde das Umsetzungsprodukt von Pentaerythrit und 4 Äq. Propylenoxid (225,0 g, 0,61 mol) mit Kaliumhydroxid (40 Gew.-% in Wasser; 3,61 g) alkalisiert und getrocknet und bei 130 °C mit Styroloxid (587,1 g, 4,89 mol) reagiert. Das erhaltene Zwischenprodukt (180,0 g, 0,14 mol) wurde bei 135 °C mit Ethylenoxid (834,9 g, 18,95 mol) umgesetzt. Nach Der Abreaktion zur Druckkonstanz wurde das Produkt auf 80 °C abgekühlt, Spuren von nicht-reagiertem Ethylenoxid durch anlegen von Vakuum für 30 min entfernt und das Produkt isoliert.

Die erfindungsgemäßen Muster 1-3 sind aus Pentaerythrit oder Glycerin gestartet. Muster 1 wurde einfach pro Alkoholgruppe propoxyliert, bevor die Styroloxid- und Ethylenoxid-Blöcke addiert wurden. Bei Muster 2-3 wurde Glycerin ohne Propoxylierung als Starter verwendet, und zuerst Styroloxid, danach Ethylenoxid addiert.

Vergleichsmuster 1 enthält Ethylendiamin als Starter-Molekül. Daher wird Diglyme als Polymerisationslösemittel benötigt. Dies führt dazu, dass das so erhaltene polymere Dispergiermittel VOC/SVOC enthält und somit die Anforderung nicht erfüllt.

Bei Vergleichsmuster 2 wurde - ähnlich wie beim erfindungsgemäßen Muster 1 - eine einfache Propoxylierung je Amin-Wasserstoff durchgeführt. Dadurch kann ein Starter mit höherem Molekulargewicht erzeugt werden, mit dem dann kein Lösemittel für die anschließende Polymerisation verwendet werden muss. Vergleichsmuster 2 ist somit VOC/SVOC-frei. Wegen der Verwendung von Ethylendiamin als Starter ist Vergleichsmuster 2 nicht erfindungsgemäß.

Vergleichsmuster 3 wurde unter Verwendung eines Polyol-Starters, Pentaerythrit, hergestellt. Im Vergleichsmuster 3 ist a = 1, d.h. der Styroloxid-Anteil ist niedriger als erfindungsgemäß erforderlich.

Vergleichsmuster 4 wurde unter Verwendung eines Polyol-Starters, Pentaerythrit, hergestellt. Im Vergleichsmuster 4 ist c = 35, d.h. der Ethylenoxid-Anteil ist höher als erfindungsgemäß erforderlich.

**Tabelle 1: Eigenschaften der Muster**

| | Zusammensetzung | OH-Zahl [mgKOH/g] | Viskosität bei 60°C [mPas] |
|---|---|---|---|
| Muster 1 | Pentaerythrit + 4 mol Propylenoxid + 12 Styroloxid + 80 Ethylenoxid | 1,3 | 236 |
| Muster 2 | Glycerin + 12 Styroloxid + 75 Ethylenoxid | 51 | 269 |
| Muster 3 | Glycerin + 12 Styroloxid + 75 Ethylenoxid + Phosphat Natriumsalz | Gesamtphosphor: 2,25%wt | 1007 |
| Vergleichsmuster 1 | Ethylendiamin + 16 Styroloxid + 100 Ethylenoxid | Gesamtstickstoff: 0,44%wt | 145 |
| Vergleichsmuster 2 | Ethylendiamin + 4 Propylenoxid + 8 Styroloxid + 80 Ethylenoxid | 59 | 237 |
| Vergleichsmuster 3 | Pentaerythrit + 4 Propylenoxid + 4 Styroloxid + 40 Ethylenoxid | 102 | 154 |
| Vergleichsmuster 4 | Pentaerythrit + 4 Propylenoxid + 8 Styroloxid + 140 Ethylenoxid | 38 | 324 |

Die angegebenen OH-Zahlen und Viskositäten wurden an der 100%igen Substanz ermittelt. Die angegebene Zahl der Oxideinheiten bezieht sich auf das gesamte Molekül. Um von den angegebenen Zahlen zu den Werten für a, b und c zu gelangen sind jene durch die Zahl der aktiven Wasserstoffatome im Startermolekül, z. B. 3 für Glycerin und 4 für Pentaerythrit, zu dividieren

**Tabelle 2: Strukturen der Muster**

| | Zusammensetzung | Struktur |
|---|---|---|
| Muster 1 | Pentaerythrit + 4 mol Propylenoxid + 12 Mol Styroloxid + 80 Mol Ethylenoxid | 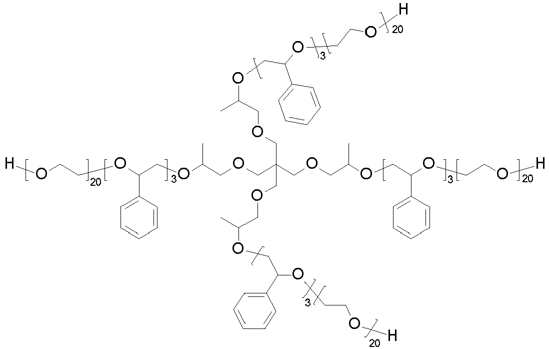 |
| Muster 2 | Glycerin + 12 Mol Styroloxid + 75 Mol Ethylenoxid | 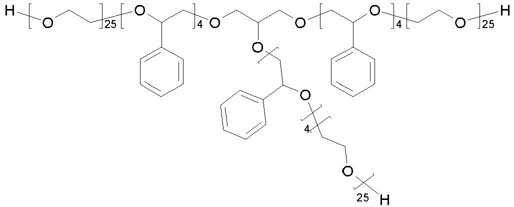 |
| Muster 3 | Glycerin + 12 Mol Styroloxid + 75 Mol Ethylenoxid + Phosphat Natriumsalz | 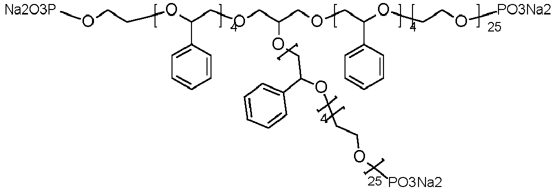 |
| Vergleichsmuster 1 | Ethylendiamin + 16 Mol Styroloxid + 100 Mol Ethylenoxid | 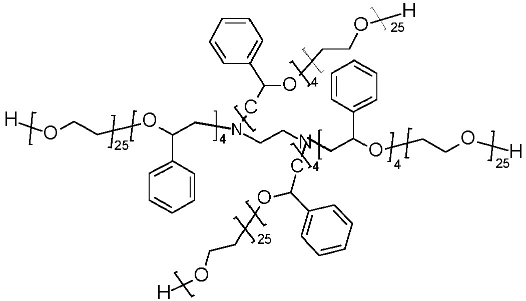 |
| Vergleichsmuster 2 | Ethylendiamin + 4 Mol Propylenoxid + 8 Mol Styroloxid + 80 Mol Ethylenoxid | 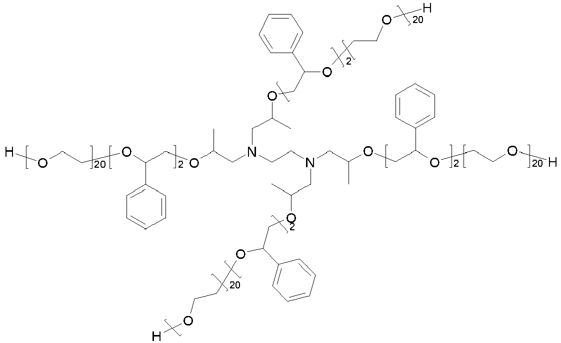 |
| Vergleichsmuster 3 | Pentaerythrit + 4 Mol Propylenoxid + 4 Mol Styroloxid + 40 Mol Ethylenoxid | 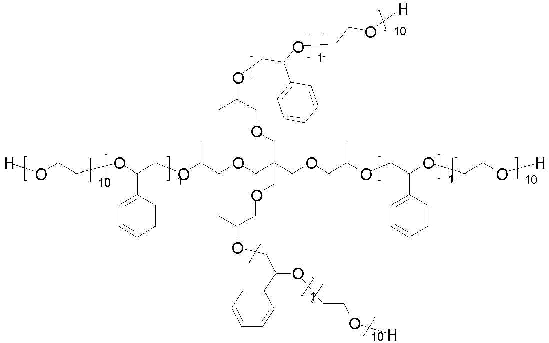 |
| Vergleichsmuster 4 | Pentaerythrit + 4 Mol Propylenoxid + 8 Mol Styroloxid + 140 Mol Ethylenoxid | 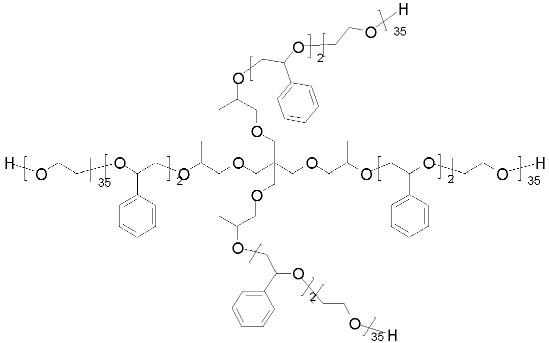 |

Um die Eignung der Polymere als Dispergiermittel für Pigmente zu bewerten, wurden wässrige Pigmentpasten hergestellt. Dazu wurde das Pigment zusammen mit dem erfindungsgemäßen Dispergiermittel und anderen, nach dem Stand der Technik bekannten, Zusätzen in entionisiertem Wasser angeteigt und dann mit einem Dissolver (z.B. von der Firma VMA-Getzmann GmbH, Type CN-F2) oder einer anderen geeigneten Apparatur vordispergiert. Dann erfolgte die Feindispergierung mit Hilfe einer Perlmühle (z.B. mit APS 500 von VMA-Getzmann) oder einem anderen geeigneten Dispergieraggregat, wobei die Mahlung mit Siliquarzitperlen oder Zirkonmischoxidperlen der Größe d = 1 mm unter Kühlung erfolgte. Anschließend wurden die Mahlkörper von der Pigmentdispersion abgetrennt und letztere bewertet. Insbesondere wurden die erfindungsgemäßen Polymere mit den Vergleichsmustern in Viskosität, Farbstärke und Kompatibilität verglichen.

Dazu wurden die vier folgenden Basispräparationen ausgewählt (alle Angaben in Masse-% bezogen auf die Gesamtzusammensetzung =100 %).

**Tabelle 3: Ausprüfungszusammensetzungen I bis IV.**

| | Pos. | I | II | III | IV |
|---|---|---|---|---|---|
| Pigment Markenname | | Hostaperm Blue B2G-EDS | Hansa Brilliant Yellow 2 GX70S | Hostaperm Green GNX | Bayferrox Red 130 |
| Pigment Color Index | | P.B. 15:3 | P.Y. 74 | P.G. 7 | P.R. 101 |
| Pigment | A | 45 | 50 | 45 | 65 |
| Dispergiermittel | B | 6 | 4 | 6 | 4 |
| Entschäumer | C | 0,3 | 0,3 | 0,3 | 0,3 |
| Feuchthaltemittel | D | 10 | 10 | 10 | 10 |
| wässriges Biozid | E | 0,2 | 0,2 | 0,2 | 0,2 |
| andere | F | - | - | - | Ölsäure 1% |
| Wasser | G | ad 100 | ad 100 | ad 100 | ad 100 |

Zur Herstellung der Pigmentpräparation wurden Komponenten B, C, D, E, F und G vorgelegt und vermischt. Anschließend wurde die pulverförmige Komponente A zugegeben und mit dem Dissolver vordispergiert. Die Feindispergierung erfolgte in einer Perlmühle mittels Zirkonmischoxidperlen der Größe d = 1 mm unter Kühlung. Mahlzeiten betrugen zwischen 30 und 60 Minuten. Anschließend wurde der Mahlkörper abgetrennt und die Pigmentpräparation isoliert. Die Pigmentpräparation wurde nach 24 Stunden auf Farbstärke (Abtönung in Dispersionsfarbe) und Viskosität hin untersucht. Anschließend wurde sie 28 Tage bei 50°C gelagert und erneut auf die beiden Eigenschaften hin untersucht, woraus sich die Lagerstabilität ergibt.

Die Viskosität wurde mit einem Kegel-Platte-Viskosimeter (Modell Haake Viskostester 550) der Firma Thermofischer GmbH bei 20°C über den Scherratenbereich 0 bis 200 s⁻¹ untersucht wobei die Scherrate von 60 s⁻¹ zur Viskositätsangabe genutzt wurde.

Anhand der Viskosität wurde die Lagerstabilität bewertet. Verglichen wurde die Viskosität nach 24h mit der gemessenen Viskosität nach Warmlagerung bei 50°C über 28 Tage. Eine Paste wurde als "sehr gut" in ihrer Lagerstabilität bewertet, wenn diese Viskositäten sich im Betrag nicht um mehr als 200 mPas unterschieden und die Paste keine Sedimentation oder Synerese aufwies. Die Lagerstabilität wurde als "gut" bezeichnet, wenn die Viskosität sich mehr als den Betrag 200 mPas änderte und/oder eine leichte Sedimentation auftrat. Nicht lagerstabile Pasten dickten signifikant während der Lagerung ein (Anstieg der Viskosität um über 400 mPas) oder wurden stichfest oder thixotrop.

Die Farbstärke wurde in Anlehnung an DIN 55986 bestimmt, indem eine 2%ige Abtönung einer Dispersionsfarbe mit der Paste von Interesse durchgeführt wurde. Die abgetönte Farbe wurde anschließend in definierter Schichtdicke auf eine Lackkarte aufgezogen und nach dem Trocknen mit einem Konica Minolta Spektralphotometer untersucht.

Die Kompatibilität wurde mittels eines Rub-out Tests bestimmt. Dazu wurde die Dispersionsfarbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche kräftiger gefärbt war, als die angrenzende, nicht nachbehandelte Fläche (vergleiche hierzu auch DE 2 368 946). Folgende Ergebnisse wurden erzielt:

**Tabelle 4: Anwendungstechnische Ergebnisse der Präparationen**

| Beispiel | Präparations-Typ | Dispergiermittel | VOC/ SVOC | Farbstärke | Kompatibilität | Viskosität (mPas) | Lagerstabilität |
|---|---|---|---|---|---|---|---|
| 1 | I | Muster 1 | nein | sehr gut | kein Rub-out | 90 | sehr gut |
| 2 | I | Muster 2 | nein | sehr gut | kein Rub-out | 92 | sehr gut |
| 3 | I | Muster 3 | nein | sehr gut | kein Rub-out | 95 | sehr gut |
| 4 | I | Vergleichsmuster 1 | ja | gut | kein Rub-out | 83 | nicht lagerstabil |
| 5 | I | Vergleichsmuster 2 | nein | sehr gut | kein Rub-out | 117 | nicht lagerstabil |
| 6 | I | Vergleichsmuster 3 | nein | sehr gut | kein Rub-out | 191 | Paste bereits nach einer Woche fest |
| 7 | I | Vergleichsmuster 4 | nein | sehr gut | kein Rub-out | 160 | nicht lagerstabil |
| 9 | II | Muster 1 | nein | sehr gut | kein Rub-out | 259 | sehr gut |
| 9a | II | Muster 2 | nein | sehr gut | kein Rub-out | 102 | sehr gut |
| 10 | II | Muster 3 | nein | sehr gut | kein Rub-out | 176 | sehr gut |
| 11 | II | Vergleichsmuster 1 | ja | sehr gut | kein Rub-out | 74 | sehr gut |
| 12 | II | Vergleichsmuster 2 | nein | gut | starker Rub-out | 86 | sehr gut |
| 13 | II | Vergleichsmuster 3 | nein | gut | kein Rub-out | 68 | nicht lagerstabil |
| 14 | II | Vergleichsmuster 4 | nein | gut | kein Rub-out | 305 | nicht lagerstabil |
| 15 | III | Muster 1 | nein | sehr gut | kein Rub-out | 107 | sehr gut |
| 16 | III | Muster 2 | nein | sehr gut | kein Rub-out | 105 | sehr gut |
| 17 | III | Muster 3 | nein | sehr gut | kein Rub-out | 246 | sehr gut |
| 18 | III | Vergleichsmuster 1 | ja | sehr gut | kein Rub-out | 105 | nicht lagerstabil |
| 19 | III | Vergleichsmuster 2 | nein | gut | starker Rub-out | 539 | sehr gut |
| 20 | IV | Muster 1 | nein | sehr gut | kein Rub-out | 728 | gut |
| 21 | IV | Vergleichsmuster 1 | ja | Erstellung einer fließfähigen Paste nicht möglich | | | |

Wie man in obigen Beispielen sieht, werden bessere Ergebnisse hinsichtlich Farbstärke, Kompatibilität, Viskosität und Lagerstabilität erzielt, wenn Polyole als Starter verwendet werden, und die erfindungsgemäßen Mengen an Oxiranderivaten eingesetzt werden.

Pigment Blue 15:3, das in den Präparationen des Beispiels A verwendet wird, lässt sich mit den erfindungsgemäßen Mustern 1-3 in allen Aspekten zufriedenstellend dispergieren. Präparationen mit den Vergleichsmustern 1 und 2 hingegen sind nicht lagerstabil, erkennbar durch eine signifikante Viskositätszunahme während der Lagerung und Thixotropie bei Vergleichsmuster 1. Die Vergleichsmuster 3 und 4 mit dem nicht erfindungsgemäßen Styroloxid- bzw. Ethylenoxid-Anteil fallen zum einen durch sehr starke Schaumbildung auf. Die Präparation mit Vergleichsmuster 3 ist zudem nach bereits einer Woche stichfest. Auch die Präparation mit Vergleichsmuster 4 ist nicht lagerstabil.

Pigment Yellow 74, das in allen Präparationen des Beispiels B verwendet wird, ist ein Pigment, das relativ leicht dispergiert werden kann und deshalb auch durch viele Dispergiermittel-Muster in zufriedenstellender Art und Weise dispergiert werden kann. Bei Vergleichsmuster 2 sieht man eine starke Unverträglichkeit der Paste mit der Basisfarbe, da ein sehr starker Rub-out beobachtet wird. Vergleichsmuster 1 führt zu einer Pigmentpräparation, die flüchtige organische Bestandteile (VOC/SVOC) enthält. Außerdem fallen die Vergleichsmuster 3 und 4 wiederum durch starke Schaumbildung und fehlende Lagerstabilität auf.

Pigment Green 7, das in den Präparationen des Beispiels B verwendet wird, lässt sich mit den erfindungsgemäßen Mustern 1-3 in allen Aspekten zufriedenstellend dispergieren. Bei Vergleichsmuster 1 ist wieder die fehlende Lagerstabilität zu bemängeln, inklusive Thixotropie und Viskositäts-Zunahme innerhalb einer Woche um mehr als 1000 mPas. Bei Vergleichsmuster 2 tritt wiederum eine starke Unverträglichkeit auf, da ein sehr starker Rub-out beobachtet wird.

Pigment Red 101 ist als einziges der Beispiele ein anorganisches Pigment. Muster 1 kann auch dieses anorganische Pigment hinreichend gut dispergieren. Bei der Lagerung tritt leichte Sedimentation ein, die sich aber leicht wieder aufrühren ließ. Mit Rheologie-Additiven bei ausgereifteren Präparationsformulierungen kann diese Eigenschaft wieder ausgeglichen werden. Mit Vergleichsmuster 1 war es nicht möglich, eine fließfähige Paste zu erstellen.

Vergleichsmuster 1 wurde mit Ethylendiamin gestartet und enthält Diglyme als Lösemittel, das VOC/SVOC beiträgt. Mit diesem Dispergiermittel können in organischen Pigmenten ähnlich gute Farbstärken erreicht werden wie mit den erfindungsgemäßen Mustern 1-3, jedoch ist lediglich die Paste mit dem wenig anspruchsvollen Pigment Yellow 74 lagerstabil. Für anorganisches Eisenoxid-Rot ist Vergleichsmuster 1 nicht zu empfehlen.

Vergleichsmuster 2 enthält ebenfalls Ethylendiamin als Starter, jedoch noch je eine Einheit Propylenoxid je aktivem Amin-Wasserstoff vor den Styroloxid-Blöcken. Diese Synthesestrategie erlaubt es, lösemittelfrei zu arbeiten, da durch die einfache Propoxylierung das Molekulargewicht des Starters erhöht wird. Somit sind die Anforderungen eines VOC/SVOC-freien Dispergiermittels erfüllt. Jedoch führt das Vergleichsmuster 2 regelmäßig zu Inkompatibilitäten mit der Basisfarbe bei der Abtönung, sichtbar durch einen starken Rub-out in Gelb und Grün.

Im Falle des Pigment Blau 15:3 ist die Paste nicht lagerstabil, es bildete sich starker Bodensatz, der sich nicht leicht wieder lösen ließ. Dieses Muster erfüllt die Anforderungen somit nicht.

Die Amin-gestarteten Vergleichsmuster können den Anforderungen nicht in allen Ansprüchen und allen getesteten Pigmentpräparationen gerecht werden. Sie haben nicht die erfindungsgemäßen Formeln (I) oder (II) als Starter.

Auch das Vergleichsmuster 3 mit nicht erfindungsgemäßem Styroloxid-Anteil (a = 1) erfüllt die Aufgabe nicht, ebenso wenig das Vergleichsmuster 4 mit zu hohem Ethylenoxid-Anteil (c = 35).

Die erfindungsgemäßen Muster 1-3 lösen die im Hinblick auf Pigmentdispersionen gestellte technische Aufgabe, unabhängig davon, ob eine Propoxylierung am Polyol-Starter durchgeführt wurde (Muster 1) oder nicht (Muster 2-3).

Zusammenfassend lässt sich sagen, dass die Aufgabe nur durch die erfindungsgemäßen Polymere mit Polyol-Startern und richtigen Anteilen an Styroloxid und Ethylenoxid gelöst wird. Nur die erfindungsgemäßen Polymere erfüllen alle erforderlichen Kriterien in den daraus resultierenden Pigmentpräparationen.

### Beispiel Pflanzenschutzformulierung

### Suspensionskonzentrat mit 430 g/L Tebuconazol

| Zusammensetzung | | SC 1 [%] | SC 2 [%] | SC3 [%] |
|---|---|---|---|---|
| Tebuconazole | | 40,70 | 40,70 | 40,70 |
| Muster 2 | | 0,60 | | |
| Vergleichsmuster 3 | | | 0,60 | |
| Vergleichsmuster 4 | | | | 0,60 |
| Genapol PF 40 | | 1,25 | 1,25 | 1,25 |
| Propylenglykol | | 5,25 | 5,25 | 5,25 |
| Silfoam SE 3060 | | 0,50 | 0,50 | 0,50 |
| Verdickerlösung mit Xanthan Gum (2%ige Lösung in Wasser) | | 10,00 | 10,00 | 10,00 |
| E-Wasser | | 41,70 | 41,70 | 41,70 |
| Σ | | 100,00 | 100,00 | 100,00 |
| Aussehen | | weiße Suspension | fest | fest |
| Dichte | [g/ccm] | 1,078 | n. f. | n. f. |
| pH-Wert | [1%ig] | 6,49 | n. f. | n. f. |
| Suspendierbarkeit | [%] | 94,26 | n. f. | n. f. |

| | | | | |
|---|---|---|---|---|
| n.f. = nicht feststellbar | | | | |

Auch in der Pflanzenschutzformulierung mit Tebuconazol ergibt lediglich die Formulierung mit dem erfindungsgemäßen Muster 2 eine stabile Suspension, während die Formulierungen mit den Vergleichsmustern fest werden.

## Patentansprüche

1. Zusammensetzungen, welche Verbindungen der Formel (I), der Formel (II), oder deren Mischungen enthalten, 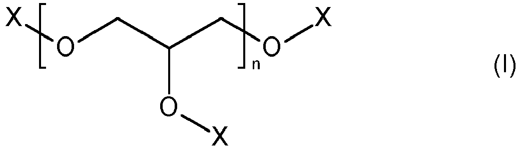 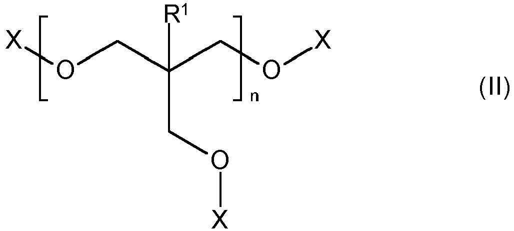 wobei
n eine ganze Zahl größer oder gleich 1
R¹ ein aliphatischer, linearer oder verzweigter Kohlenwasserstoffrest mit 1 bis 10 Kohlenstoffatomen, ein Wasserstoffatom, die Struktureinheit -O-X, oder die Struktureinheit -CH₂-O-X ist,
X der Formel (III) entspricht 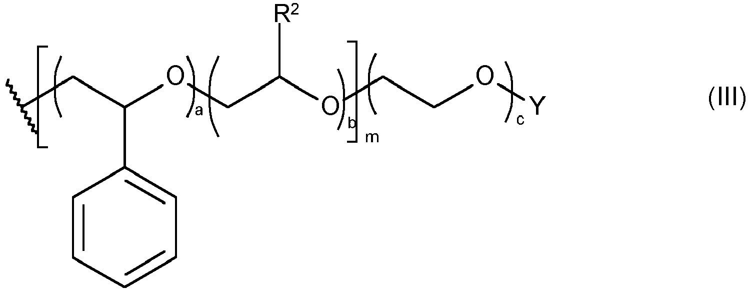
worin
a eine ganze Zahl von 2 bis 6
b eine ganze Zahl von 0 bis 3 ,
c eine ganze Zahl von 20 bis 28,
m 1 oder 2,
R² ein aliphatischer, linearer oder verzweigter Kohlenwasserstoffrest mit 1 bis 10 Kohlenstoffatomen,
Y Wasserstoff, -SO₃M, -SO₂M, -PO₃M₂, oder -CH₂COOM, und
M ein Kation ist.

2. Zusammensetzungen nach Anspruch 1, worin in Formel III, von links gelesen, der Block m vor dem Block c steht, und worin die Blöcke a und b innerhalb von m statistisch oder blockweise angeordnet sind.

3. Zusammensetzungen nach Anspruch 1 und/oder 2, worin a 3, 4 oder 5, speziell 3 oder 4 ist.

4. Zusammensetzungen nach einem oder mehreren der Ansprüche 1 bis 3, worin b eine ganze Zahl von 0 bis 2, speziell 0 oder 1 ist.

5. Zusammensetzungen nach einem oder mehreren der Ansprüche 1 bis 4, worin m gleich 1 ist.

6. Zusammensetzungen nach einem oder mehreren der Ansprüche 1 bis 5, worin Y H oder -PO₃M₂ ist.

7. Zusammensetzungen nach einem oder mehreren der Ansprüche 1 bis 6, worin das Verhältnis von (a+b) : c 1:4 bis 1:6 ist.

8. Zusammensetzungen nach einem oder mehreren der Ansprüche 1 bis 7, worin
a für eine Zahl von 2 bis 6, insbesondere 3, 4 oder 5,
b für eine Zahl von 0 bis 3,
c für eine Zahl von 20 bis 28,
m für 1 oder 2, und
Y für H oder -PO₃M₂ stehen.

9. Zusammensetzungen nach einem oder mehreren der Ansprüche 1 bis 7, worin a eine Zahl von 2 bis 6, b null oder 1, m gleich eins, und c eine Zahl von 20 bis 28 ist.

10. Zusammensetzungen nach einem oder mehreren der Ansprüche 1 bis 9, worin R¹ für -CH₂-O-X steht.

11. Zusammensetzungen nach einem oder mehreren der Ansprüche 1 bis 9, worin R² für -CH₃ steht.

12. Zusammensetzungen nach einem oder mehreren der Ansprüche 1 bis 9, worin n für 1 steht.

13. Verfahren zur Herstellung von Verbindungen der Formel (I), der Formel (II), oder deren Mischungen, 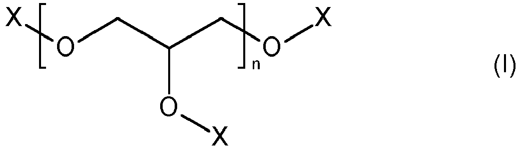 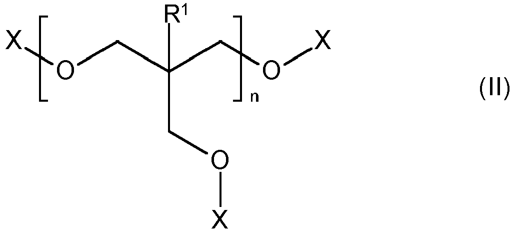 wobei
n eine ganze Zahl größer oder gleich 1
R¹ ein aliphatischer, linearer oder verzweigter Kohlenwasserstoffrest mit 1 bis 10 Kohlenstoffatomen, ein Wasserstoffatom, die Struktureinheit -O-X, oder die Struktureinheit -CH₂-O-X ist,
X der Formel (III) entspricht 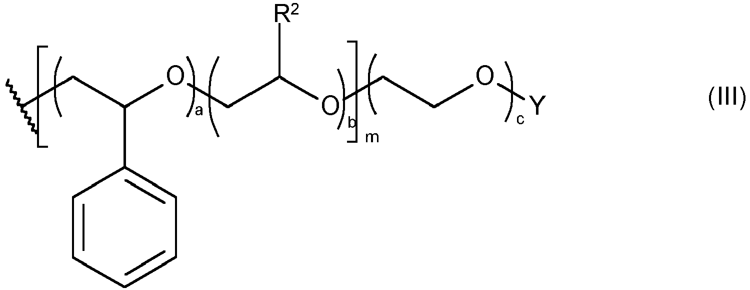
worin
a eine ganze Zahl von 2 bis 6
b eine ganze Zahl von 0 bis 3,
c eine ganze Zahl von 20 bis 28,
m 1 oder 2,
R² ein aliphatischer, linearer oder verzweigter Kohlenwasserstoffrest mit 1 bis 10 Kohlenstoffatomen,
Y Wasserstoff, -SO₃M, -SO₂M, -PO₃M₂, oder -CH₂COOM, und
M ein Kation ist,
indem man
1. einen Alkohol vorlegt, der sich aus Formel I oder Formel II durch formale Ersetzung des Restes X durch H ergibt,
2. diesen, je aktivem Wasserstoffatom, mit 2 bis 6 mol Styroloxid und gegebenenfalls mit bis zu 3 mol eines C₃- bis C₁₂-Alkylenoxids alkoxyliert, wobei die Alkoxylierung gleichzeitig mit Styroloxid und dem C₃- bis C₁₂-Alkylenoxid erfolgen kann, oder sequentiell,
3 Schritt 2 gegebenenfalls einmal oder zweimal wiederholt, und
4. das so erhaltene Produkt mit 20 bis 28 mol Ethylenoxid je aktivem Wasserstoffatom alkoxyliert.

14. Verfahren nach Anspruch 13, worin die Alkoxylierung mit Alkali-, Erdalkali- oder Doppelmetall-Cyanid Katalysatoren durchgeführt wird.

15. Verfahren nach Anspruch 13 und/oder 14, worin die Alkoxylierung bei Temperaturen im Bereich von 130-140°C und einem Druck von 2 bis 9 bar durchgeführt wird.

16. Verfahren nach einem oder mehreren der Ansprüche 13 bis 15, worin am Reaktionsende der Katalysator neutralisiert wird.

17. Verfahren nach einem oder mehreren der Ansprüche 13 bis 16, worin das erhaltene Produkt durch Anlagerung einer anionischen Gruppe Y, ausgewählt aus der Gruppe bestehend aus -SO₃M, -SO₂M, -PO₃M₂, oder -CH₂COOM, modifiziert wird.

18. Verfahren nach einem oder mehreren der Ansprüche 13 bis 17, worin nach Reaktionsende das erhaltene Produkt wässrig abgemischt und mit Milchsäure neutralisiert wird.

19. Verfahren nach einem oder mehreren der Ansprüche 13 bis 18, worin a eine Zahl von 2 bis 6, b null oder 1, m gleich 1, und c eine Zahl von 20 bis 28 ist.

20. Verfahren nach einem oder mehreren der Ansprüche 13 bis 19, worin Y die Bedeutung PO₃M₂ hat.

21. Verwendung von Verbindungen der Formel (I), der Formel (II), oder deren Mischungen 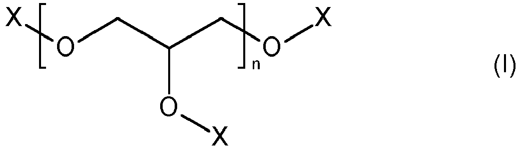 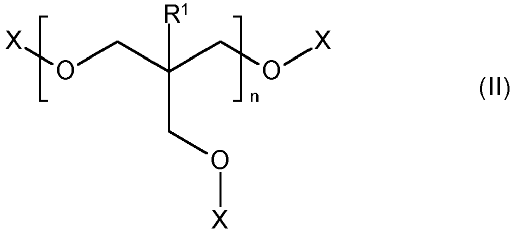 wobei
n eine ganze Zahl größer oder gleich 1
R¹ ein aliphatischer, linearer oder verzweigter Kohlenwasserstoffrest mit 1 bis 10 Kohlenstoffatomen, ein Wasserstoffatom, die Struktureinheit -O-X, oder die Struktureinheit -CH₂-O-X ist,
X der Formel (III) entspricht 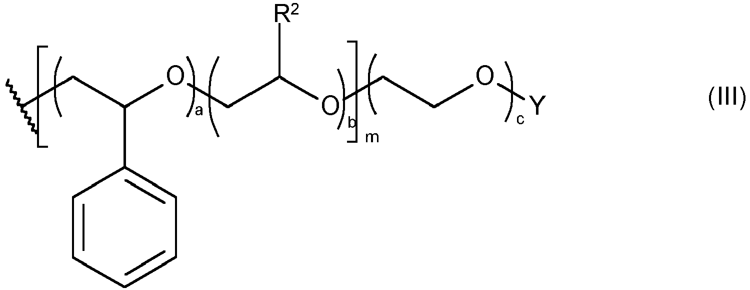
worin
a eine ganze Zahl von 2 bis 6
b eine ganze Zahl von 0 bis 3 ,
c eine ganze Zahl von 20 bis 28,
m 1 oder 2,
R² ein aliphatischer, linearer oder verzweigter Kohlenwasserstoffrest mit 1 bis 10 Kohlenstoffatomen,
Y Wasserstoff, -SO₃M, -SO₂M, -PO₃M₂, oder -CH₂COOM, und
M ein Kation ist,
als Dispergiermittel für wässrige Formulierungen von Pflanzenschutzmitteln.

## Claims

1. Compositions containing compounds of formula (I), formula (II), or mixtures thereof, 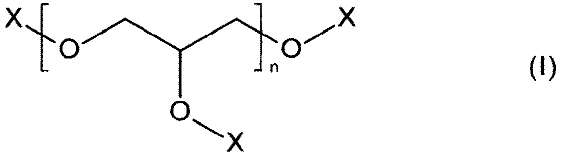 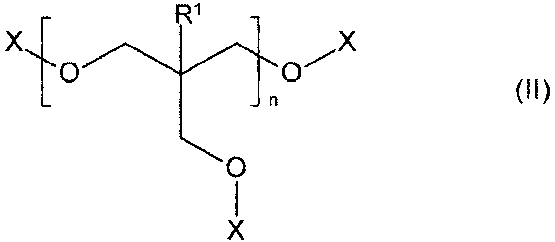 wherein
n is an integer greater than or equal to 1
R¹ is an aliphatic, linear or branched hydrocarbon radical having 1 to 10 carbon atoms, a hydrogen atom, the structural unit -O-X, or the structural unit -CH₂-O-X,
X corresponds to formula (III) 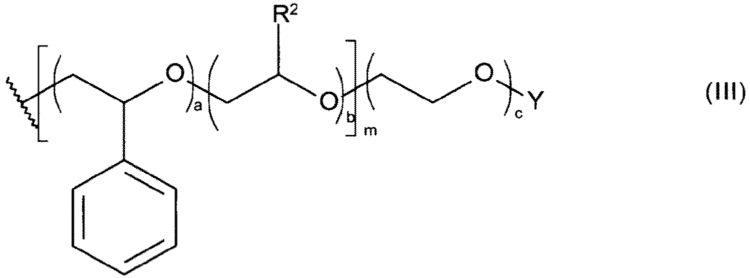
in which
a is an integer from 2 to 6,
b is an integer from 0 to 3,
c is an integer from 20 to 28,
m is 1 or 2,
R² is an aliphatic, linear or branched hydrocarbon radical having 1 to 10 carbon atoms,
Y is hydrogen, -SO₃M, -SO₂M, -PO₃M₂ or -CH₂COOM, and
M is a cation.

2. Compositions according to Claim 1, wherein in formula III, read from left to right, block m is before block c, and wherein blocks a and b are arranged within m in a random or blockwise manner.

3. Compositions according to Claim 1 and/or 2, wherein a is 3, 4 or 5, especially 3 or 4.

4. Compositions according to one or more of Claims 1 to 3, wherein b is an integer from 0 to 2, especially 0 or 1.

5. Compositions according to one or more of Claims 1 to 4, wherein m is equal to 1.

6. Compositions according to one or more of Claims 1 to 5, wherein Y is H or -PO₃M₂.

7. Compositions according to one or more of Claims 1 to 6, wherein the ratio of (a+b):c is 1:4 to 1:6.

8. Compositions according to one or more of Claims 1 to 7, wherein
a is a number from 2 to 6, in particular 3, 4 or 5,
b is a number from 0 to 3,
c is a number from 20 to 28,
m is 1 or 2, and
Y is H or -PO₃M₂.

9. Compositions according to one or more of Claims 1 to 7, wherein a is a number from 2 to 6, b is zero or 1, m is equal to one, and c is a number from 20 to 28.

10. Compositions according to one or more of Claims 1 to 9, wherein R¹ is -CH₂-O-X.

11. Compositions according to one or more of Claims 1 to 9, wherein R² is -CH₃.

12. Compositions according to one or more of Claims 1 to 9, wherein n is 1.

13. Process for preparing compounds of formula (I), formula (II), or mixtures thereof, 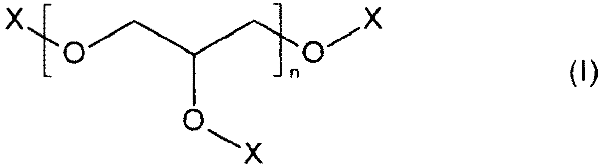 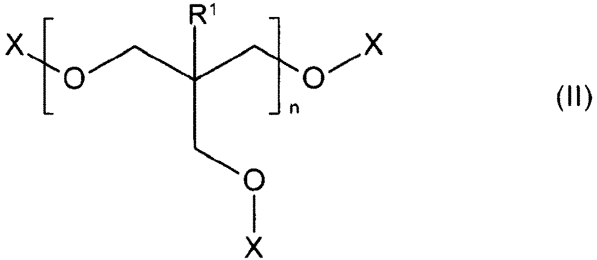 wherein
n is an integer greater than or equal to 1
R¹ is an aliphatic, linear or branched hydrocarbon radical having 1 to 10 carbon atoms, a hydrogen atom, the structural unit -O-X, or the structural unit -CH₂-O-X,
X corresponds to formula (III) 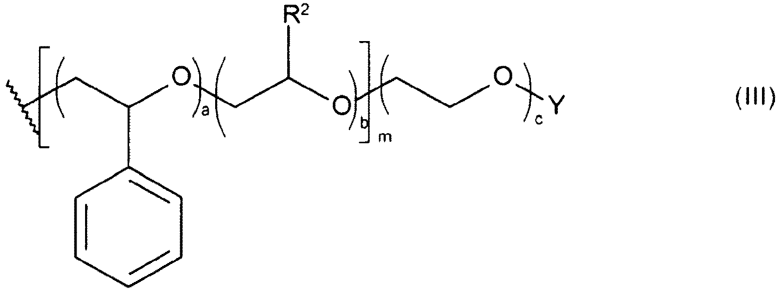
in which
a is an integer from 2 to 6,
b is an integer from 0 to 3,
c is an integer from 20 to 28,
m is 1 or 2,
R² is an aliphatic, linear or branched hydrocarbon radical having 1 to 10 carbon atoms,
Y is hydrogen, -SO₃M, -SO₂M, -PO₃M₂ or -CH₂COOM, and
M is a cation,
by
1. providing an alcohol resulting from formula I or formula II by formal replacement of the X radical with H,
2. alkoxylating said alcohol with, per active hydrogen atom, 2 to 6 mol of styrene oxide and optionally with up to 3 mol of a C₃- to C₁₂-alkylene oxide, wherein the alkoxylation can be effected simultaneously with styrene oxide and the C₃- to C₁₂-alkylene oxide or sequentially,
3. optionally repeating step 2 once or twice, and
4. alkoxylating the product thus obtained with 20 to 28 mol of ethylene oxide per active hydrogen atom.

14. Process according to Claim 13, wherein the alkoxylation is conducted using alkali metal, alkaline-earth metal or double metal cyanide catalysts.

15. Process according to Claim 13 and/or 14, wherein the alkoxylation is conducted at temperatures in the range from 130-140°C and at a pressure of from 2 to 9 bar.

16. Process according to one or more of Claims 13 to 15, wherein the catalyst is neutralized at the end of reaction.

17. Process according to one or more of Claims 13 to 16, wherein the product obtained is modified by adduct formation with an anionic group Y, selected from the group consisting of -SO₃M, -SO₂M, -PO₃M₂ or -CH₂COOM.

18. Process according to one or more of Claims 13 to 17, wherein after the end of reaction the product obtained is mixed with an aqueous substance and neutralized with lactic acid.

19. Process according to one or more of Claims 13 to 18, wherein a is a number from 2 to 6, b is zero or 1, m is equal to 1, and c is a number from 20 to 28.

20. Process according to one or more of Claims 13 to 19, wherein Y is PO₃M₂.

21. Use of compounds of formula (I), formula (II), or mixtures thereof, 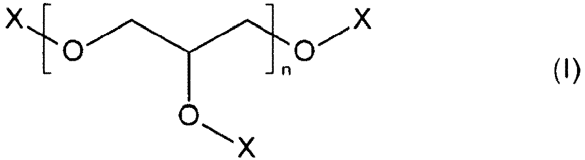 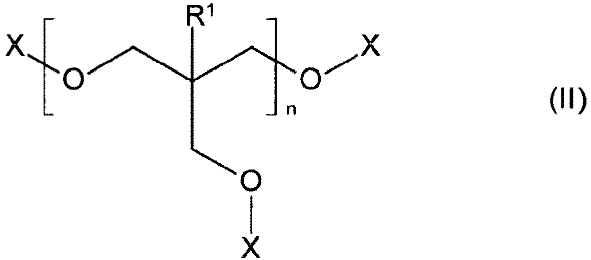 wherein
n is an integer greater than or equal to 1
R¹ is an aliphatic, linear or branched hydrocarbon radical having 1 to 10 carbon atoms, a hydrogen atom, the structural unit -O-X, or the structural unit -CH₂-O-X,
X corresponds to formula (III) 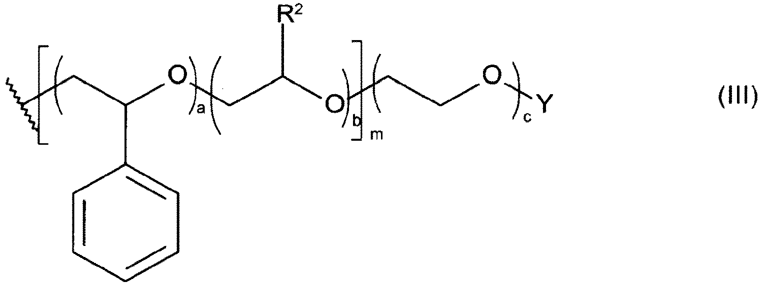
in which
a is an integer from 2 to 6,
b is an integer from 0 to 3,
c is an integer from 20 to 28,
m is 1 or 2,
R² is an aliphatic, linear or branched hydrocarbon radical having 1 to 10 carbon atoms,
Y is hydrogen, -SO₃M, -SO₂M, -PO₃M₂ or -CH₂COOM, and
M is a cation,
as a dispersing agent for aqueous formulations of crop protection agents.

## Revendications

1. Compositions qui contiennent des composés de Formule (I), de Formule (II) ou de mélanges de ceux-ci, 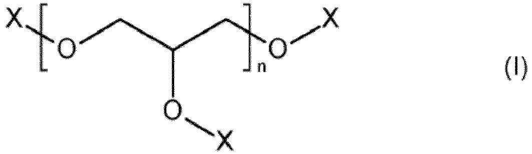 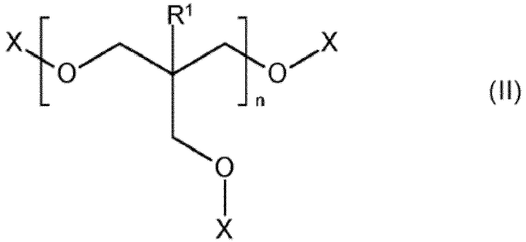 dans lesquelles
n représente un nombre entier supérieur ou égal à 1
R¹ représente un radical hydrocarboné aliphatique, linéaire ou ramifié, ayant 1 à 10 atomes de carbone, un atome d'hydrogène, le motif structural -O-X ou le motif structural -CH₂-O-X,
X correspond à la Formule (III) 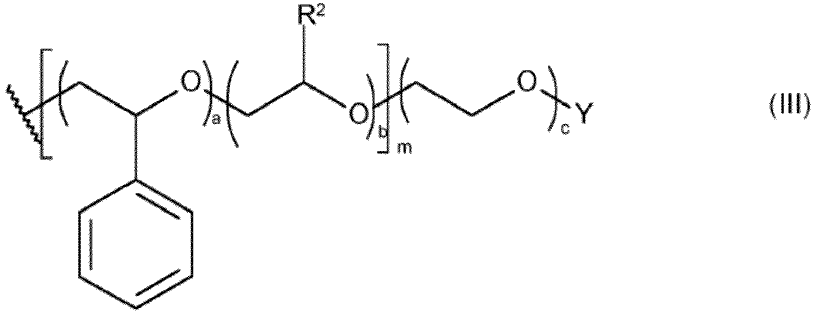
dans laquelle
a représente un nombre entier de 2 à 6
b représente un nombre entier de 0 à 3,
c représente un nombre entier de 20 à 28,
m représente 1 ou 2,
R² représente un radical hydrocarboné aliphatique, linéaire ou ramifié ayant 1 à 10 atomes de carbone,
Y représente un hydrogène, -SO₃M, -SO₂M, -PO₃M₂ ou-CH₂COOM, et
M représente un cation.

2. Compositions selon la revendication 1, dans lesquelles dans la Formule III, de gauche à droite, le bloc m précède le bloc c, et les blocs a et b sont disposés à l'intérieur de m d'une manière aléatoire ou en blocs.

3. Compositions selon la revendication 1 et/ou 2, dans lesquelles a représente 3, 4 ou 5, spécialement3 ou 4.

4. Compositions selon l'une ou plusieurs des revendications 1 à 3, dans lesquelles b représente un nombre entier de 0 à 2, spécialement 0 ou 1.

5. Compositions selon l'une ou plusieurs des revendications 1 à 4, dans lesquelles m est égal à 1.

6. Compositions selon l'une ou plusieurs des revendications 1 à 5, dans lesquelles Y représente H ou -PO₃M₂.

7. Compositions selon l'une ou plusieurs des revendications 1 à 6, dans lesquelles le rapport (a+b):c est de 1:4 à 1:6.

8. Compositions selon l'une ou plusieurs des revendications 1 à 7, dans lesquelles
a représente un nombre de 2 à 6, en particulier 3, 4 ou 5,
b représente un nombre de 0 à 3,
c représente un nombre de 20 à 28,
m représente 1 ou 2, et
Y représente H ou -PO₃M₂.

9. Compositions selon l'une ou plusieurs des revendications 1 à 7, dans lesquelles a représente un nombre de 2 à 6, b représente zéro ou 1, m est égal à un, et c représente un nombre de 20 à 28.

10. Compositions selon l'une ou plusieurs des revendications 1 à 9, dans lesquelles R¹ représente-CH₂-O-X.

11. Compositions selon l'une ou plusieurs des revendications 1 à 9, dans lesquelles R² représente-CH₃.

12. Compositions selon l'une ou plusieurs des revendications 1 à 9, dans lesquelles n représente 1.

13. Procédé de fabrication de composés de Formule (I), de Formule (II), ou de leurs mélanges, 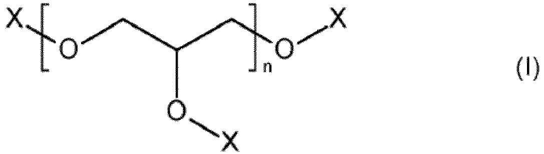 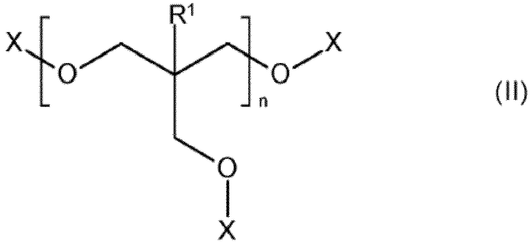 dans lesquelles
n représente un nombre entier supérieur ou égal à 1,
R¹ représente un radical hydrocarboné aliphatique, linéaire ou ramifié ayant 1 à 10 atomes de carbone, un atome d'hydrogéne, le motif structural -O-X ou le motif structural -CH2-O-X,
X correspond à la formule (III) 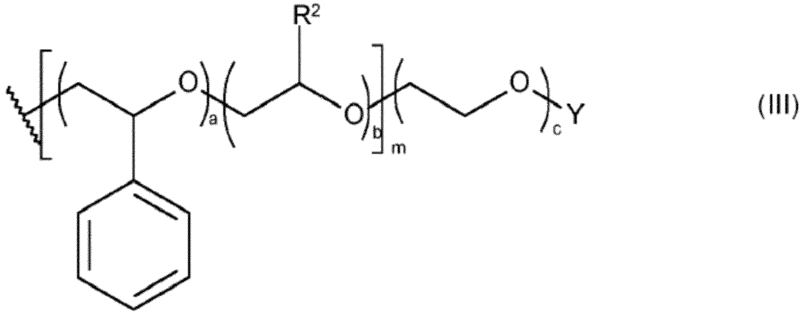
dans laquelle
a représente un nombre entier de 2 à 6
b représente un nombre entier d3e 0 à 3,
c représente un nombre entier de 20 à 28,
m représente 1 ou 2,
R² représente un radical hydrocarboné aliphatique, linéaire ou ramifié ayant 1 à 10 atomes de carbone,
Y représente un hydrogène, -SO₃M, -SO₂M, -PO₃M₂ ou-CH₂COOM, et
M représente un cation,
dans lequel
1. on met en place un alcool qui résulte de la Formule I ou de la Formule II par remplacement formel du radical X par H,
2. on alcoxyle ce dernier, avec par atome d'hydrogène actif 2 à 6 moles d'oxyde de styrène et éventuellement jusqu'à 3 moles d'un oxyde d'alkylène en C₃ à C₁₂, l'alcoxylation pouvant avoir lieu en même temps avec l'oxyde de styrène et l'oxyde d'alkylène en C₃ à C₁₂, ou séquentiellement,
3. on répète l'étape 2 éventuellement une ou deux fois, et
4. on alcoxyle le produit ainsi obtenu avec 20 à 28 moles d'oxyde d'éthylène par atome d'hydrogène actif.

14. Procédé selon la revendication 13, dans lequel l'alcoxylation est mise en œuvre avec des catalyseurs à base de cyanure d'un métal alcalin, d'un métal alcalino-terreux ou d'un cyanure métallique double.

15. Procédé selon la revendication 13 et/ou 14, dans lequel l'alcoxylation est mise en œuvre à des températures dans la plage de 130 à 140 °C et sous une pression de 2 à 9 bar.

16. Procédé selon l'une ou plusieurs des revendications 13 à 15, dans lequel le catalyseur est neutralisé à la fin de la réaction.

17. Procédé selon l'une ou plusieurs des revendications 13 à 16, dans lequel le produit obtenu est modifié par fixation d'un groupe anionique Y choisi dans le groupe consistant en -SO₃M, -SO₂M, -PO₃M₂ ou-CH₂COOM.

18. Procédé selon l'une ou plusieurs des revendications 13 à 17, dans lequel le produit obtenu est mélangé en milieu aqueux après la fin de la réaction et est neutralisé avec de l'acide lactique.

19. Procédé selon l'une ou plusieurs des revendications 13 à 18, dans lequel a représente un nombre de 2 à 6, b représente zéro ou 1, m est égal à 1 et c représente un nombre de 20 à 28.

20. Procédé selon l'une ou plusieurs des revendications 13 à 19, dans lequel Y représente PO₃M₂.

21. Utilisation, comme dispersant pour formulations aqueuses de produits phytosanitaires, de composés de formule (I), de formule (II) ou de leurs mélanges 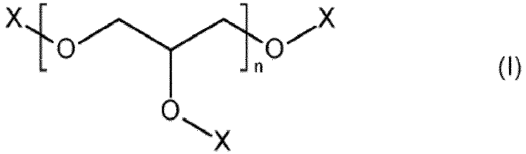 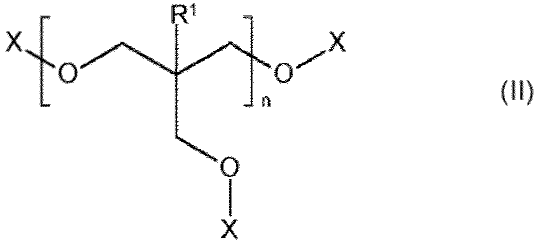 dans lesquelles
n représente un nombre entier supérieur ou égal à 1
R¹ représente un radical hydrocarboné aliphatique, linéaire ou ramifié ayant 1 à 10 atomes de carbone, un atome d'hydrogène, le motif structural -O-X ou le motif structural -CH₂-O-X,
X correspond à la Formule (III) 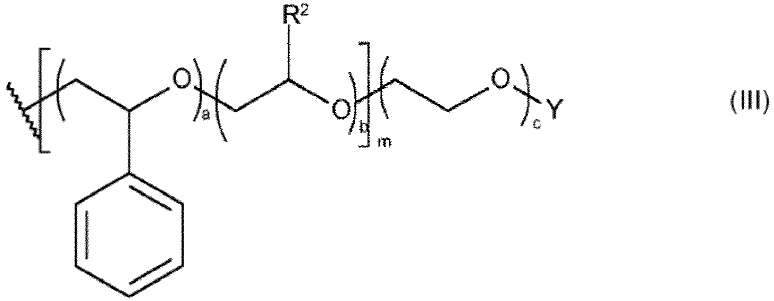
dans laquelle
a représente un nombre entier de 2 à 6
b représente un nombre entier de 0 à 3,
c représente un nombre entier de 20 à 28,
m représente 1 ou 2,
R² représente un radical hydrocarboné aliphatique, linéaire ou ramifié ayant 1 à 10 atomes de carbone,
Y représente un hydrogène, -SO₃M, -SO₂M, -PO₃M₂ ou-CH₂COOM, et
M représente un cation.
